# EUROPEAN PATENT APPLICATION

(11) **EP 4 641 152 A1**
(43) Date of publication of application: **29.10.2025**
(21) Application number: 23906473.6
(22) Date of filing: 27.10.2023
(51) Int. Cl.: G01K 1/02, G01K 7/00, G01K 11/324, H02G 1/10, H02G 9/02

(54) **DISPLAY METHOD, DISPLAY PROGRAM, AND DIAGNOSIS DEVICE**

(30) Priority: 20.12.2022 JP 2022203633
(71) Applicant: Yokogawa Electric Corporation, Tokyo 180-8750 (JP)
(72) Inventor: MINATOYAMA Misaki, Musashino-shi, Tokyo 180-8750 (JP); NAKATSU Yuri, Musashino-shi, Tokyo 180-8750 (JP); KONADA Soichiro, Musashino-shi, Tokyo 180-8750 (JP); ANNEN Masato, Musashino-shi, Tokyo 180-8750 (JP)
(74) Representative: Stöckeler, Ferdinand
(86) International application number: PCT/JP2023/038962
(87) International publication number: WO 2024/135100

(57) **Abstract**

A display method includes acquiring, as a first temperature, a measured temperature value at at least one temperature measurement position of a cable (40) at a first time, displaying the first temperature at the at least one temperature measurement position, and displaying, when a position at which a first condition is satisfied based on the first temperature exists among the at least one temperature measurement position, information in a first form as information for determining whether a state of the cable is abnormal at the position at which the first condition is satisfied, the information in the first form being displayed in correspondence with the position at which the first condition is satisfied within the display of the first temperature.

## Description

### CROSS-REFERENCE TO RELATED APPLICATION

The present application claims priority to Japanese Patent Application No. 2022-203633 filed on December 20, 2022, the entire contents of which are incorporated herein by reference.

### TECHNICAL FIELD

The present disclosure relates to a display method, a display program, and a diagnostic apparatus.

### BACKGROUND

Conventional methods are known for monitoring submarine cables by calculating the thermal resistance of the ground surrounding a submarine cable based on the change over time in the temperature and electric current of the submarine cable and estimating the covering height of the submarine cable based on the thermal resistance of the ground (see, for example, Patent Literature (PTL) 1).

### CITATION LIST

### Patent Literature

PTL 1: JP 2016-201989 A

### SUMMARY

### (Technical Problem)

Demand exists for increasing the accuracy of the diagnostic results in a system that diagnoses the state of a cable based on the temperature of the cable.

It is an aim of the present disclosure, conceived in light of the above, to provide a display method, a display program, and a diagnostic apparatus that increase the accuracy of diagnostic results of the state of a cable.

### (Solution to Problem)

(1) A display method according to several embodiments includes acquiring, as a first temperature, a measured temperature value at a temperature measurement position of a cable at a first time, displaying the first temperature, and displaying, when a first condition is satisfied based on the first temperature, information in a first form in correspondence with a portion at which the first condition is satisfied within display of the first temperature. Displaying the information in the first form in correspondence with the display of the measured temperature value makes it easier for an operator, monitoring personnel, or other human to grasp the information representing the state of the cable. As a result of making it easier for the operator, monitoring personnel, or other human to grasp the information representing the state of the cable, the accuracy of the diagnosis result of the state of the cable is enhanced.
(2) A display method according to an embodiment may further include, in (1), acquiring, as a second temperature, a measured temperature value at the temperature measurement position of the cable at a second time earlier than the first time, and displaying, when the first condition is satisfied based on a change from the second temperature to the first temperature, the information in the first form in correspondence with a portion at which the first condition is satisfied within the display of the first temperature. Displaying the information in the first form in correspondence with the display of the measured temperature value enables an operator, monitoring personnel, or other human to grasp information representing that the state of the cable, as expressed by the change in temperature over time, is likely to be abnormal, without needing to see information representing the change in temperature over time. Since it suffices to display only the measured temperature value, the amount of displayed information is reduced. By a reduction in the amount of displayed information, the space on the display screen can be effectively utilized when displaying equivalent information.
(3) A display method according to an embodiment may further include, in (2), displaying information representing the change from the second temperature to the first temperature. Displaying the actual change over time in the temperature at the temperature measurement position of the cable can provide an operator, monitoring personnel, or other human with information to consider in diagnosing whether the state of the cable is abnormal. As a result of the operator, monitoring personnel, or other human obtaining information to consider, the accuracy of the diagnosis result of the state of the cable is enhanced.
(4) In the display method of (3) according to an embodiment, the information representing the change from the second temperature to the first temperature may include the information in the first form. Displaying the actual change over time in the temperature at the temperature measurement position of the cable as the information in the first form can provide an operator, monitoring personnel, or other human with information to consider in diagnosing whether the state of the cable is abnormal. As a result of the operator, monitoring personnel, or other human obtaining information to consider, the accuracy of the diagnosis result of the state of the cable is enhanced.
(5) A display method according to an embodiment may further include, in any one of (1) to (4), displaying, when a second condition based on the first temperature is satisfied, information in a second form in correspondence with a portion at which the second condition is satisfied within the display of the first temperature. Displaying the information in the second form, which is different from the first form, in correspondence with the display of the measured temperature value enables an operator, monitoring personnel, or other human easily to grasp that it is less likely that the state of the cable is abnormal at the position where the information in the second form is displayed than that the state of the cable is abnormal at the position where the information in the first form is displayed. Varying the display form according to the likelihood that the state of the cable is abnormal can provide an operator, monitoring personnel, or other human with information to consider in diagnosing whether the state of the cable is abnormal. As a result of the operator, monitoring personnel, or other human obtaining information to consider, the accuracy of the diagnosis result of the state of the cable is enhanced.
(6) A display method according to an embodiment may further include, in (2) or (3), calculating a danger level based on the first temperature and the second temperature, and displaying the danger level in correspondence with the display of the first temperature. Displaying the danger level can provide an operator, monitoring personnel, or other human with information to consider in diagnosing whether the state of the cable is abnormal. As a result of the operator, monitoring personnel, or other human obtaining information to consider, the accuracy of the diagnosis result of the state of the cable is enhanced.
(7) A display method according to an embodiment may further include, in (6), displaying, when the danger level satisfies a third condition, the information in the first form in correspondence with at least one of a portion at which the third condition is satisfied within the display of the first temperature, or a portion at which the third condition is satisfied within display of the danger level. Displaying the information in the first form in correspondence with the display of the measured temperature value on the basis of the danger level enables an operator, monitoring personnel, or other human to grasp information representing that the state of the cable, as expressed by the change in temperature over time, is likely to be abnormal, without needing to see information representing the change in temperature over time. Since it suffices to display only the measured temperature value, the amount of displayed information is reduced. By a reduction in the amount of displayed information, the space on the display screen can be effectively utilized when displaying equivalent information.
(8) A display program according to several embodiments is configured to cause a computer to execute the display method according to any one of (1) to (7).
(9) A diagnostic apparatus according to several embodiments includes a controller configured to execute the display method according to any one of (1) to (7).

### (Advantageous Effect)

According to the display method, display program, and diagnostic apparatus of the present disclosure, the accuracy of diagnostic results of the state of a cable is increased.

### BRIEF DESCRIPTION OF THE DRAWINGS

In the accompanying drawings:
FIG. 1 is a diagram illustrating a display screen of measured temperature values according to a comparative example;
FIG. 2 is a schematic diagram illustrating an example configuration of a diagnostic system according to an embodiment;
FIG. 3 is a block diagram illustrating an example configuration of a diagnostic system according to an embodiment;
FIG. 4 is a schematic diagram illustrating an example configuration of a cable;
FIG. 5A is a cross-sectional diagram illustrating an example of a cable buried underground;
FIG. 5B is a cross-sectional diagram illustrating an example of a cable that is nearly exposed to the seabed;
FIG. 6 is a diagram illustrating an example of a display screen of measurement results including temperature trends;
FIG. 7 is a diagram illustrating an example of a display screen of measurement results including danger level trends;
FIG. 8 is a diagram illustrating an example of a display screen in which the display style is changed for the portion of the measured temperature values for which a condition is satisfied; and
FIG. 9 is a flowchart illustrating example procedures of a diagnostic method according to an embodiment.

### DETAILED DESCRIPTION

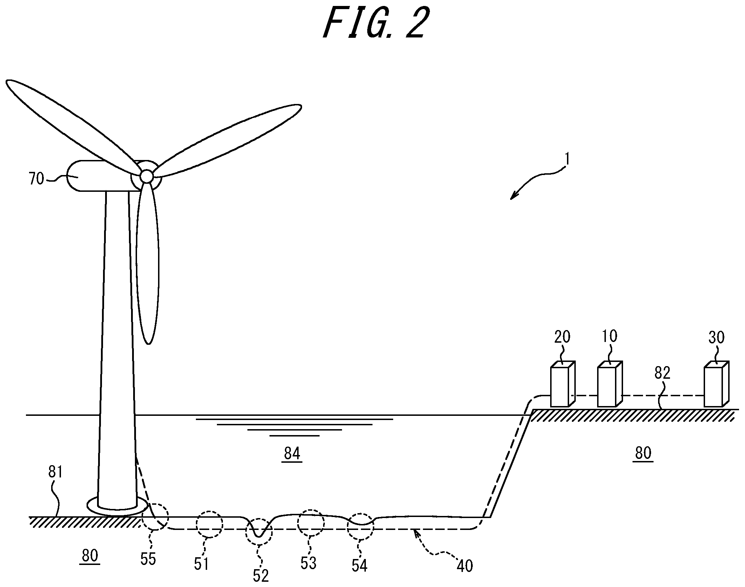

A diagnostic system 1 (see FIG. 2) according to one embodiment of the present disclosure takes, as the target of diagnosis, a submarine cable connected to an offshore wind power generation apparatus or the like and is used to diagnose the state of the submarine cable. The embodiment of the diagnostic system 1 is described below while being contrasted with a comparative example.

### (Comparative Example)

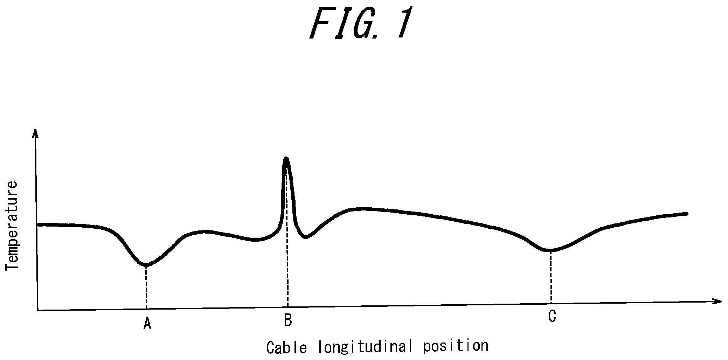

A method for diagnosing the state of a submarine cable based on measured temperature values of the submarine cable as a target can be considered as a comparative example. Suppose that the measured temperature value of the submarine cable is acquired for each longitudinal position of the submarine cable, as illustrated in FIG. 1. The horizontal axis in FIG. 1 represents the longitudinal position of the submarine cable. The vertical axis represents the measured temperature value of the submarine cable at each position.

The graph in FIG. 1 illustrates how the measured temperature value deviates from the normal state at point A, B, or C. The point of deviation from the normal state may include a point at which the measured temperature value is out of a predetermined range or may include a point at which the measured temperature value is a local maximum or local minimum. Although an operator, monitoring personnel, or other human monitoring the state of the submarine cable can look at a graph of the measured temperature values at each position of the submarine cable and diagnose that the state of the submarine cable might not be normal at positions where the measured temperature values deviate from the normal state, it is difficult to diagnose with a high degree of accuracy that the state is actually abnormal. Even if the state of the submarine cable is actually abnormal at that position, it is difficult for an operator, monitoring personnel, or other human to diagnose the type of abnormality of the submarine cable with a high degree of accuracy.

The present disclosure therefore describes a display method, a display program, and a diagnostic apparatus 10 (see FIG. 2) that increase the accuracy of the diagnostic results of the state of a cable 40 (see FIG. 2) as the target in the diagnostic system 1.

### (Embodiment of Present Disclosure)

As illustrated in FIG. 2, the diagnostic system 1 according to an embodiment includes the diagnostic apparatus 10, a temperature measurement apparatus 20, and a display apparatus 30. The diagnostic system 1 provides information necessary for an operator, monitoring personnel, or other human to diagnose the state of the cable 40. The diagnostic system 1 not only provides the information necessary for an operator, monitoring personnel, or other human to diagnose the state of the cable 40, but diagnostic system 1 itself may also diagnose the state of the cable 40 based on acquired information.

In the present embodiment, the cable 40 is a submarine cable buried in the ground 80 so as to pass through a seabed 81 for use in transporting the electricity generated by an offshore wind power generation apparatus 70 to land 82, for communication between the offshore wind power generation apparatus 70 and equipment such as the diagnostic apparatus 10 on land 82, or for various other uses. The destination to which the cable 40 transports electricity or to which the cable 40 is connected for communication is not limited to equipment on land 82, but may be equipment that is offshore, in the sea, or the like.

The cable 40 includes portions that are buried under the ground 80 and portions that are exposed or approaching exposure from under the ground 80 into the sea 84, depending on the unevenness of the seabed 81. Causes of the cable 40 being exposed or approaching exposure from under the ground 80 into the sea 84 include the seabed 81 being dug up or the cable 40 being lifted upwards. The portion buried in the ground 80 is illustrated as a buried portion 51 and a buried portion 53. The portion exposed from under the ground 80 into the sea 84 is illustrated as an exposed portion 52. The cable 40 includes portions that are not exposed in the sea 84 but have a shallow burial depth under the ground 80. The portion having a shallow burial depth under the ground 80 is illustrated as a shallow buried portion 54. A state in which the cable 40 is fully exposed from the seabed 81, a state in which a portion of the cable 40 is exposed, or a state in which the cable 40 is not yet exposed but the thickness of the sediment that should be over the cable 40 is reduced, is considered a burial anomaly and may be detected by temperature measurement. The state in which the cable 40 is not yet exposed but the thickness of the sediment that should be over the cable 40 is reduced includes a state in which the cable 40 is approaching exposure, for example, when the thickness of the sediment over the cable 40 should be 2 m but has been halved to 1 m or reduced to several tens of centimeters.

The exposed portion 52 or shallow buried portion 54 may be caused by the seabed 81 becoming concave due to a phenomenon called scouring, in which the seabed 81 is eroded by ocean currents, or by the dragging of ship anchors or fishing gear. The exposed portion 52 or shallow buried portion 54 may also be caused by the cable 40 being lifted upwards due to movement of the seabed 81 caused by an earthquake or the like.

The cable 40 includes a portion that is drawn from under the ground 80 into the sea 84 for connection to the offshore wind power generation apparatus 70. The portion that is drawn from under the ground 80 into the sea 84 is illustrated as a boundary portion 55.

Submarine cables are susceptible to bending or damage due to collisions with fishing gear, anchors, or the like against the exposed portion 52 or shallow buried portion 54. An operator, monitoring personnel, or other human may diagnose whether the submarine cable is in an exposed state or a state near exposure into the sea 84 based on the information provided by the diagnostic system 1. The diagnostic apparatus 10 may also diagnose whether the submarine cable is in an exposed state or a state near exposure into the sea 84 based on information acquired by the diagnostic apparatus 10 itself.

The temperature of a submarine cable differs between when it is buried under the ground 80 and when it is exposed or nearly exposed into the sea 84. Therefore, in the diagnostic system 1 according to the present embodiment, the temperature measurement apparatus 20 measures the temperature of at least a portion of the cable 40. The display apparatus 30 displays information such as the measured temperature value of each portion of the cable 40. Based on the information displayed on the display apparatus 30, an operator, monitoring personnel, or other human diagnoses, as the state of the cable 40, whether the cable 40 is buried under the ground 80 or exposed into the sea 84, or whether there is an increased possibility of exposure. The operator, monitoring personnel, or other human may diagnose the state of heat generation in the cable 40 as well as the burial state of the cable 40.

### (Example Configuration of Diagnostic System 1)

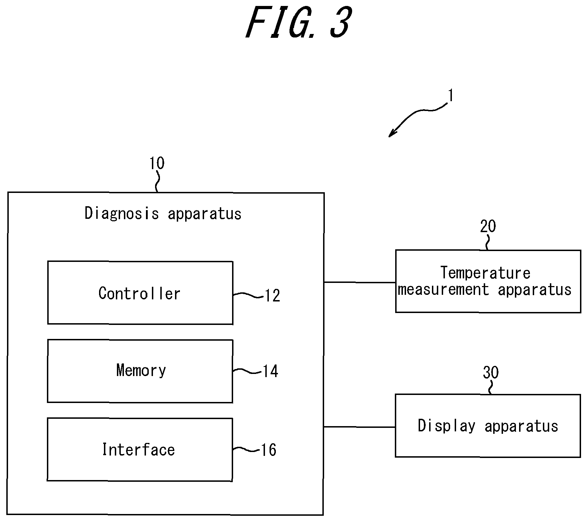

An example configuration of the diagnostic system 1 illustrated in FIG. 3 is described below.

### <Diagnostic Apparatus 10>

The diagnostic apparatus 10 displays the temperature of each portion of the cable 40 measured by the temperature measurement apparatus 20 on the display apparatus 30, as described below. When a condition based on the temperature of each portion of the cable 40 is satisfied, the diagnostic apparatus 10 displays, on the display apparatus 30, the temperature of each portion of the cable 40 together with information in a form enabling an operator, monitoring personnel, or other human to identify the portion at which the condition is satisfied. Hereinafter, the operator, monitoring personnel, or other human is also referred to simply as a human. The diagnostic apparatus 10 may diagnose whether the state of each portion of the cable 40 is abnormal based on the content of the display. The diagnostic apparatus 10 includes a controller 12, a memory 14, and an interface 16.

The controller 12 controls each component of the diagnostic apparatus 10. The controller 12 may, for example, be configured by a processor such as a central processing unit (CPU). The controller 12 may implement predetermined functions by having the processor execute a predetermined program.

The memory 14 may store various information used for operations of the controller 12, programs for implementing the functions of the controller 12, and the like. The memory 14 may function as a working memory of the controller 12. The memory 14 may, for example, be a semiconductor memory. The memory 14 may be configured to include volatile memory or non-volatile memory. The memory 14 may be configured as a non-transitory computer readable storage medium. The memory 14 may be included in the controller 12.

The memory 14 may store information at the time of burial of the cable 40. The information at the time of burial of the cable 40 may include the burial position or burial depth of the cable 40 when the cable 40 was successfully buried. The information at the time of burial of the cable 40 may include the measured temperature value of each portion of the cable 40 when no electric current is flowing in the cable 40 immediately after the cable 40 has been successfully buried or immediately after maintenance has successfully been performed on the cable 40. The information at the time of burial of the cable 40 may include information about the geology of the location where the cable 40 was buried. The information about the geology may include the soil type or the geothermal conductivity. The memory 14 may store information after the cable 40 is buried. The information after burial of the cable 40 may include the measured temperature value of each portion of the cable 40 when electric current is flowing in the cable 40. The information after burial of the cable 40 may include data relating the magnitude of the electric current flowing in the cable 40, the magnitude of the voltage applied to the cable 40, and the temperature of each portion of the cable 40. The memory 14 may include characteristics of the temperature measurements in the cable 40.

The interface 16 is configured to include a communication device that communicably connects the diagnostic apparatus 10 with the temperature measurement apparatus 20, the display apparatus 30, or the like. The communication device may be configured to communicate based on a mobile communication standard, such as 4^{th} Generation (4G), Long Term Evolution (LTE), or 5^{th} Generation (5G). The communication device may be configured to be capable of communication based on a communication standard such as Local Area Network (LAN). The communication device may be configured to be capable of wired or wireless communication.

The interface 16 may be configured to include a display device. The display device may include various types of displays, such as a liquid crystal display. The interface 16 may be configured to include an audio output device, such as a speaker. The interface 16 is not limited to these examples and may be configured to include various other output devices.

The interface 16 may be configured to include an input device that accepts input from the user. The input device may, for example, include a keyboard or physical keys, a touch panel or touch sensor, or a pointing device such as a mouse. The interface 16 may be configured to include other calculators or diagnostic apparatuses 10. The input device is not limited to these examples and may be configured to include a variety of other devices. The input device may be configured to allow input of parameters and the like for the diagnostic apparatus 10 to diagnose the state of the cable 40.

The diagnostic apparatus 10 may be configured as a Personal Computer (PC) or as at least one server apparatus. The diagnostic apparatus 10 may be realized in a cloud computing system.

### <Temperature Measurement Apparatus 20>

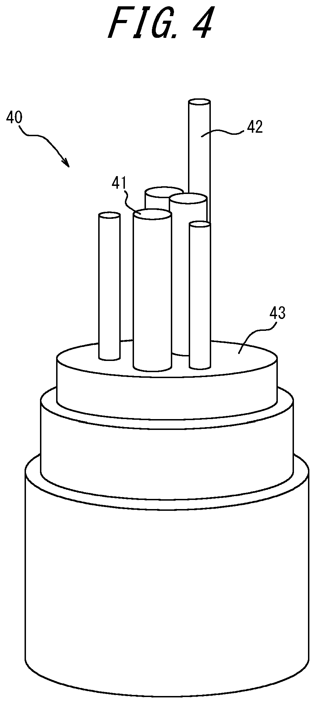

The temperature measurement apparatus 20 measures the temperature of at least a portion of the cable 40. The portion of the cable 40 whose temperature is to be measured by the temperature measurement apparatus 20 is also referred to as the measurement target portion. In order for the diagnostic system 1 to diagnose the burial state, disconnection state, and the like of a long cable 40 in its entirety, the temperature needs to be measured for a large number of portions of the cable 40, i.e., hundreds, thousands, or more points in the cable 40. The measurement target portions may be set at predetermined intervals along the longitudinal direction of the cable 40, such as at 1 m intervals, or at indefinite intervals. In the present embodiment, the cable 40 is assumed to include a power line 41, an optical fiber 42, and a sheath 43, as illustrated in FIG. 4. The power line 41 and the optical fiber 42 are protected inside the sheath 43. In the present embodiment, the temperature measurement apparatus 20 uses the optical fiber 42 to measure the temperature of each portion of the cable 40 in the longitudinal direction. The optical fiber 42 used for temperature measurement is also referred to as a Distributed Temperature Sensor (DTS).

Specifically, the temperature measurement apparatus 20 transmits pulsed light into the optical fiber 42. The pulsed light that enters the optical fiber 42 is scattered by Raman scattering at various positions in the optical fiber 42. The scattered light yielded by Raman scattering is also referred to as Raman scattered light. At least a portion of the Raman scattered light returns to the entrance side of the optical fiber 42. The temperature measurement apparatus 20 acquires a signal that is based on the Raman scattered light returning to the entrance side of the fiber.

The Raman scattered light includes Stokes light that is shifted to longer wavelengths from the wavelength of the incident pulsed light and anti-Stokes light that is shifted to shorter wavelengths from the wavelength of the incident pulsed light. The intensity of each component of the Raman scattered light depends on the temperature of the optical fiber 42 at the position where the Raman scattering occurred. The temperature measurement apparatus 20 can calculate the temperature of the optical fiber 42 at the position where the optical signal was scattered by analyzing the Raman scattered light that is reflected and returns. Based on the time from when an optical signal is transmitted until the optical signal is reflected and returns, the temperature measurement apparatus 20 can also calculate the position where the received optical signal was reflected. Accordingly, the temperature measurement apparatus 20 can calculate the temperature of the optical fiber 42 at each position of the optical fiber 42.

The temperature of each portion of the optical fiber 42 is considered to be approximately the same as the temperature of each portion of the cable 40 corresponding to each portion of the optical fiber 42. The temperature measurement apparatus 20 can measure the temperature of each portion of the cable 40 by measuring the temperature of each portion of the optical fiber 42. In the present embodiment, it is assumed that the temperature of each portion of the cable 40 is measured at 1 meter intervals. The interval at which the temperature is measured is not limited to 1 meter and may be set to various lengths.

The temperature measurement apparatus 20 may be configured to measure the temperature of each portion of the cable 40 using temperature sensors installed at each temperature measurement target portion of the cable 40. The temperature sensors may be mounted on the outside of the sheath 43 of the cable 40 or may be embedded within the sheath 43. The temperature sensors may be mounted on connectors of the cable 40.

The temperature measurement apparatus 20 is not limited to a measurement method using the optical fiber 42 or a measurement method using temperature sensors and may be configured to measure the temperature of portions of the cable 40 using various other methods.

### <Display Apparatus 30>

The display apparatus 30 displays information necessary for a human to diagnose the state of the cable 40. The display apparatus 30 may display various data, including the results of temperature measurement of at least a portion of the cable 40, the change over time in the results of temperature measurement, or the like. The display apparatus 30 may include various types of displays, such as a liquid crystal display. The display apparatus 30 may be included in the diagnostic apparatus 10 as the display device of the interface 16 of the diagnostic apparatus 10.

### (Operation Example of Diagnostic System 1)

As described above, in the diagnostic system 1 according to the present embodiment, the diagnostic apparatus 10 displays the measured temperature values of each portion of the cable 40, which is the target of diagnosis, on the display apparatus 30. The measured temperature values of each portion of the cable 40 include, for example, the measured temperature value at each of a plurality of temperature measurement positions set in the extension direction of the cable 40. The plurality of temperature measurement positions may be set at predetermined intervals, such as at 1 m intervals, or at indefinite intervals.

Here, it is not possible to definitively diagnose that the state at each temperature measurement position of the cable 40 has changed to an abnormal state simply because the temperature at each temperature measurement position of the cable 40 has increased or decreased. Therefore, in the diagnostic system 1 according to the present embodiment, when a condition based on the temperature at each temperature measurement position of the cable 40 is satisfied, the diagnostic apparatus 10 displays information on the temperature measurement position at which the condition is satisfied or additional information, together with the temperature at that temperature measurement position of the cable 40, in a form visible to a human on the display apparatus 30. A human can diagnose the state at each temperature measurement position of the cable 40 based on the information displayed on the display apparatus 30. In other words, the diagnostic apparatus 10 can provide information for a human to diagnose the state of the cable 40 at each temperature measurement position. The diagnostic apparatus 10 itself may diagnose the state at each temperature measurement position of the cable 40.

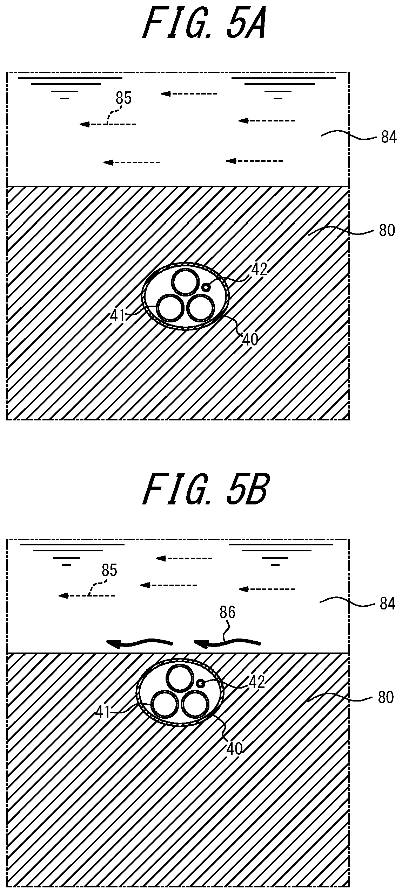

For example, as illustrated in FIGS. 5A and 5B, the amount of heat transferred from the cable 40 into the sea 84 depends on the burial depth of the cable 40 under the ground 80. As illustrated in FIG. 5A, when the cable 40 is buried deep in the ground 80, the amount of heat lost from the cable 40 by an ocean current 85 in the sea 84 is less. On the other hand, if the cable 40 is about to be exposed from the ground 80 to the sea 84, or if the cable 40 is exposed to the sea 84, as illustrated in FIG. 5B, the amount of heat lost from the cable 40 due to an ocean current 86, which is a portion of the ocean current 85 in the sea 84 close to the cable 40, is greater. The reduction of sediment on the cable 40 due to the burial anomaly of the cable 40 causes the cable 40 to be closer to or in contact with seawater. The cable 40 loses heat to seawater when the cable 40 is close to or in contact with seawater. As the cable 40 loses heat to seawater, the temperature of the portion of the cable 40 that is close to or in contact with seawater is relatively lower than the temperature of the portion where the cable 40 is normally buried. Therefore, it is determined that the diagnosis target portion of the cable 40 with a lower temperature is in a state of abnormal burial, where heat is lost to seawater and the amount of sediment on the cable 40 is reduced. In comparing FIG. 5A and FIG. 5B, the closer the burial position of the cable 40 is to being in the sea 84, the lower the temperature of the cable 40 at that burial position. Therefore, a human or the diagnostic apparatus 10 can diagnose the burial position of each portion of the cable 40 based on the measured temperature value of each portion of the cable 40.

If the cable 40 is bent or damaged, the resistance of the power line 41 of the cable 40 can increase. The increased resistance of the power line 41 increases the amount of heat generated at the bent or damaged portion. The temperature of the portion of the cable 40 with increased heat generation will be higher. Therefore, a human or the diagnostic apparatus 10 can diagnose abnormalities such as bends or damage occurring in each portion of the cable 40 based on the measured temperature value of each portion of the cable 40.

The human or the diagnostic apparatus 10 is not limited to diagnosing abnormalities at the burial position of the cable 40, or abnormalities such as bends or damage in the cable 40, but can also diagnose various other states of the cable 40. The following describes an operation example in which the diagnostic system 1 provides information for a human to diagnose the state of the cable 40.

### <Display of Measured Temperature Value>

The controller 12 of the diagnostic apparatus 10 acquires the measured temperature value at each temperature measurement position of the cable 40 at the first time from the temperature measurement apparatus 20. The measured temperature value at each temperature measurement position of the cable 40 at the first time is also referred to as the first temperature. In other words, the controller 12 may acquire the first temperature, which is the temperature at at least one temperature measurement position of the cable 40 at the first time. The first time may be any time during the period in which the controller 12 is operating to generate information for monitoring the state of the cable 40.

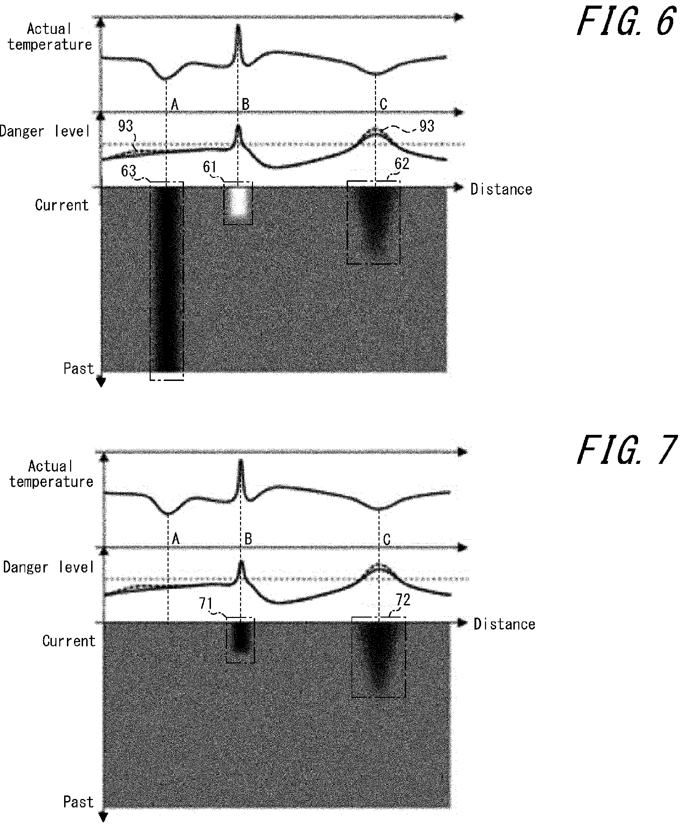

The controller 12 displays the first temperature on the display apparatus 30. The controller 12 may acquire the first temperature at a plurality of positions of the cable 40 and display the distribution of the first temperature on the display apparatus 30. The controller 12 may display the distribution of the first temperature in a graph depicting the real temperature in FIG. 6, for example. The vertical axis of the graph of the actual temperature represents the first temperature. The horizontal axis represents the distance from the temperature measurement apparatus 20 to the temperature measurement point of the cable 40. The distance to the temperature measurement point of the cable 40 corresponds to the longitudinal position of the cable 40. In other words, the controller 12 may display the first temperature, which is the temperature at at least one temperature measurement position of the cable 40 at the first time.

The controller 12 may display, on the display apparatus 30, the change over time in the measured temperature value of each portion of the cable 40. The controller 12 may acquire the measured temperature value of each portion of the cable 40 at a second time earlier than the first time. Here, the controller 12 acquires the measured temperature value of each portion of the cable 40 at predetermined time intervals. The predetermined time interval may be set to various lengths in one minute, one hour, one day, one week, one month, or one year increments, for example. The first time corresponds to the time at which the current measured temperature value of each portion of the cable 40 for monitoring the current state of the cable 40 is acquired. The second time corresponds to the time at which a past measured temperature value of each portion of the cable 40 used for monitoring the current state of the cable 40 was acquired. Therefore, the second time may correspond to a time that is earlier than the first time by an amount of time corresponding to the predetermined time interval. When the predetermined time interval is constant, the second time may correspond to a time that is earlier than the first time by a natural number multiple of the predetermined time interval. The measured temperature value of each portion of the cable 40 at the second time is also referred to as the second temperature. The controller 12 may acquire the measured temperature value of each portion of the cable 40 at a plurality of second times earlier than the first time. That is, the controller 12 may acquire the temperatures at the plurality of second times as a plurality of second temperatures.

The controller 12 may display, on the display apparatus 30, the change over time in the measured temperature value of each portion of the cable 40 by arranging the display corresponding to the second temperature side by side with the display corresponding to the first temperature. The controller 12 may display the change over time in the measured temperature value of each portion of the cable 40 as an image depicted in grayscale, for example in FIG. 6. The image representing the change over time in the measured temperature value is also referred to as a temperature trend. The image representing the change over time in the measured temperature value includes pixels that represent, in grayscale, the measured temperature value at a certain position of the cable 40 at a certain time. Each row of pixels in the image represents a measured temperature value of each portion of the cable 40 at each time. The pixels in each row are aligned in the left-right direction. Each row corresponds to a time from the past towards the present, from bottom to top. The range of time corresponding to the pixels in each row of the image, i.e., the range of time displayed as an image, may be set to various ranges, such as the last hour, the last 24 hours (i.e., one day), or the last week. The image allows an understanding of facts such as how the temperature at each position of the cable 40 is changing within the range of time displayed as an image, or how long the change has continued. In other words, the rectangular pattern in the image of FIG. 6 corresponds to a display in the form of a bar graph representing, as a vertical length, the amount of time that the measured temperature value at the position of the cable 40 corresponding to the pattern has continued in a state differing from the surrounding measured values. The pixels in each column in the image represent the distance from the temperature measurement apparatus 20 to the temperature measurement point of the cable 40, corresponding to the temperature measurement position of the cable 40. The pixels in each column are aligned in the up-down direction. Each column is aligned with the distance from the temperature measurement apparatus 20 to the temperature measurement point of the cable 40 and corresponds to the longitudinal position of the cable 40. In the display in FIG. 6, a graph representing the measured temperature value of each portion of the cable 40 is associated with a temperature trend representing the change over time in the temperature of each portion of the cable 40.

In the image in FIG. 6, a rectangular pattern 61 of a color close to white, which is displayed at the position corresponding to point B, indicates that the duration of the state in which the temperature is higher than the surroundings is short, i.e., that the duration of the current temperature is short. A triangular pattern 62 of a color close to black, at a position corresponding to point C, indicates that the duration of the state in which the temperature is lower than the surroundings is short, but is longer than at the position corresponding to point B. A rectangular pattern 63 of a color close to black, at a position corresponding to point A, indicates that at least for the time slot in the range displayed by the image, the duration of the state in which the temperature is lower than the surroundings is long, i.e., the duration of the current temperature is long. A human may diagnose that a sudden abnormality has occurred for point B, corresponding to pattern 61. A human may diagnose point C, corresponding to pattern 62, as a slowly developing abnormality. A human may diagnose point A, corresponding to pattern 63, not as an abnormal state but rather a normal state in which some factor causes the temperature of a particular portion of the cable 40 to be continually low. Displaying the actual change over time in the temperature at the temperature measurement position of the cable 40 can provide a human with information to consider in diagnosing whether the state of the cable 40 is abnormal. As a result of a human obtaining information to consider, the accuracy of the diagnosis result of the state of the cable 40 is enhanced.

### <Display of Danger Level>

The controller 12 may calculate values representing the state of each portion of the cable 40, such as the occurrence of an abnormality in the burial state of the cable 40 at each portion of the cable 40. The occurrence of a burial abnormality may cause an accident or hazardous event in the operation of the equipment or in activities in the vicinity of the equipment, such as a portion of the cable 40 exposed from the seabed 81 being caught and damaged by an anchor or the like. Therefore, the value representing the state of each portion of the cable 40 is also referred to as the danger level. The controller 12 may calculate the danger level of each portion of the cable 40 based on the first temperature. As the state of the diagnosis target portion of the cable 40 is closer to abnormal, the controller 12 calculates the danger level of the diagnosis target portion as a higher value. As the state of the diagnosis target portion is closer to normal, the controller 12 calculates the danger level as a lower value. The danger level may be calculated as a normalized value in a range between 0 and 1. The diagnosis target portion corresponds to any portion of the cable 40.

The controller 12 may calculate the value of the danger level representing the state of the diagnosis target portion of the cable 40 as 1 when the diagnosis target portion of the cable 40 is in a normal state of being buried sufficiently deep in the ground 80, and may calculate the value of the danger level to be greater than 1 as the diagnosis target portion of the cable 40 is buried at a shallower position. The expression of the value of the danger level is not limited to these examples. As long as the degree of danger of the state of the cable 40 is recognized, the value of the danger level may be expressed in any way, including percentages and the like.

In the following description, it is assumed that the value of the danger level is expressed as a normalized value between 0 and 1, with the value being closer to 0 as the state of the diagnosis target portion of the cable 40 is closer to normal and closer to 1 as the state of the diagnosis target portion of the cable 40 is closer to abnormal. The controller 12 may, for example, calculate the danger level as a value of 0.5 or higher in response to the cable 40 still being buried, but with the burial position becoming shallower and approaching exposure to the sea 84. The controller 12 may, for example, calculate the danger level to be 0.5 when the burial depth of the diagnosis target portion of the cable 40 is about 50 cm. The controller 12 may, for example, calculate the danger level as a value of 0.95 or higher in response to the cable 40 being exposed to the sea 84. The values such as 0.5 or 0.95 calculated by the controller 12 as the value of the danger level in response to the abnormal state or other state of the cable 40 are not limited to these values. The controller 12 may set the value of the danger level according to the abnormal state or other state of the cable 40 as appropriate.

The controller 12 may, for example, calculate the danger level as a high value in response to a state such that the cable 40 is bent or damaged. For example, as the resistance at a certain position of the cable 40 is higher, the controller 12 may calculate the danger level at that position as a higher value.

The controller 12 may calculate the danger level based on both the first temperature, which is the temperature measured at the temperature measurement position of the cable 40 at the first time, and the second temperature, which is the temperature measured at the temperature measurement position of the cable 40 at the second time earlier than the first time. The controller 12 may calculate the danger level based on the amount of change from the second temperature to the first temperature, i.e., from the amount of change from the temperature at the second time to the temperature at the first time. The controller 12 may calculate the danger level for a certain portion of the cable 40 based on a comparison of the first temperature of that portion with the first temperature of the surrounding portions. The controller 12 may, for example, calculate the danger level as a high value for a portion that has a higher or lower first temperature than its surroundings.

The controller 12 may calculate the danger level for a certain portion of the cable 40 based on a comparison of the amount of change in the temperature of that portion with the amount of change in the temperature of the surrounding portions. The controller 12 may, for example, calculate the danger level as a high value for a portion that has a higher amount of change in temperature than its surroundings.

The controller 12 may display, on the display apparatus 30, the danger level calculated based on the measured temperature value of each portion of the cable 40. The controller 12 may, for example, display the danger level in a graph illustrated as the danger level in FIG. 6, in correspondence with the display of the first temperature. The vertical axis of the graph of the danger level represents the danger level. The horizontal axis represents the distance from the temperature measurement apparatus 20 to the temperature measurement point of the cable 40, i.e., the longitudinal position of the cable 40. The data represented by a solid line in the graph of the danger level represents the danger level calculated based on the actual measured temperature values of each portion of the cable 40. The data 93 represented by a dashed line in the graph of the danger level represents the result of predicting the future danger level by calculation, machine learning, or the like. In this way, the graph may be represented in such a way that the danger level based on the actual measured temperature value of each portion of the cable 40 is compared with the result of predicting the danger level.

The controller 12 may display the measured temperature value of each portion of the cable 40 and an image representing the change over time in the temperature of each portion of the cable 40 side by side in association with the longitudinal position of the cable 40. The controller 12 may display the measured temperature value of each portion of the cable 40 and the danger level of each portion of the cable 40 side by side in association with the longitudinal position of the cable 40. The controller 12 may display the measured temperature value of each portion of the cable 40, an image representing the change over time in the temperature of each portion of the cable 40, and the danger level of each portion of the cable 40 side by side in association with the longitudinal position of the cable 40. In other words, the controller 12 may display the measured temperature value of each portion of the cable 40 and at least one of the change over time in the temperature and the danger level side by side in association.

The controller 12 may, as illustrated in FIG. 7, display an image representing the change over time in the danger level instead of an image representing the change over time in temperature. The image representing the change over time in the danger level is also referred to as a danger level trend. The image representing the change over time in the danger level in FIG. 7 includes pixels that represent, in grayscale, the magnitude of the danger level at a certain position of the cable 40 at a certain time. Each row of pixels in the image represents a measured temperature value of each portion of the cable 40 at each time. The pixels in each row are aligned in the left-right direction. Each row corresponds to a time from the past towards the present, from bottom to top. The pixels in each column in the image represent the distance from the temperature measurement apparatus 20 to the temperature measurement point of the cable 40, corresponding to the temperature measurement position of the cable 40. The pixels in each column are aligned in the up-down direction. Each column is aligned with the distance from the temperature measurement apparatus 20 to the temperature measurement point of the cable 40 and corresponds to the longitudinal position of the cable 40. In the display in FIG. 7, a graph representing the measured temperature value of each portion of the cable 40 is associated with a danger level trend representing the danger level of each portion of the cable 40.

In the image in FIG. 7, the rectangle-shaped pattern 71 of a color close to black, at a position corresponding to point B, indicates that the danger level has suddenly increased since a time close to the current time. In addition, the triangular pattern 72 of a color close to black, at a position corresponding to point C, indicates that the range with a high danger level has expanded with the passage of time. On the other hand, in the area corresponding to point A, there is no pattern indicating an increase in the danger level despite the change in temperature. This is because if the cable 40 is normally buried, but the degree of burial is reduced or the cable 40 is exposed, the temperature differs between the normal time, i.e., the time in the past when the cable was properly buried, and the abnormal time, i.e., the present time. This is also because even if the temperature at the present time is a high or low value for a portion that is likely to be determined as being abnormal or possibly being abnormal, if the same high or low temperature has continued for a long time, for example, the portion is considered to be at a location that was not originally buried and is thus determined not to be abnormal, i.e., not dangerous. For a portion that is likely to be determined as being abnormal or possibly being abnormal in the image in FIG. 7, even if the value is low for the portion corresponding to point A, if the low temperature has continued for a long time for the portion corresponding to point A, then point A is, for example, considered to be at a location that was not originally buried. Point A is thus determined not to be abnormal, i.e., not dangerous. A human may diagnose that a sudden abnormality has occurred for point B, corresponding to pattern 71. A human may diagnose point C, corresponding to pattern 72, as a slowly developing abnormality. A human may diagnose point A, at which no characteristic pattern is observed, not as an abnormal state but rather a normal state in which some factor causes the temperature of a particular portion of the cable 40 to be continually low. Displaying the danger level can provide a human with information to consider in diagnosing whether the state of the cable 40 is abnormal. As a result of a human obtaining information to consider, the accuracy of the diagnosis result of the state of the cable 40 is enhanced.

### <Additional Display>

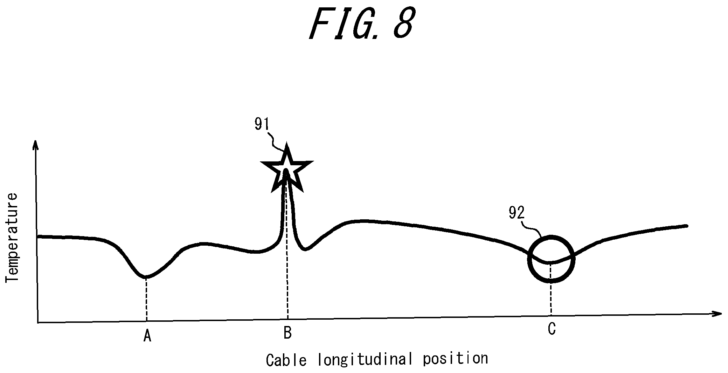

As illustrated in FIG. 8, the controller 12 may display information in a different form so as to add information, to the graph of the temperature distribution, that cannot be interpreted by a human by looking only at the graph of the temperature distribution. For example, as information that cannot be interpreted by a human by looking only at the graph of the temperature distribution for point B, the controller 12 may superimpose a first mark 91, indicating that the duration of the current temperature at point B is short, on point B in the graph as additional information, thereby displaying the additional information in correspondence with the temperature at point B. For example, as information that cannot be interpreted by a human by looking only at the graph of the temperature distribution for point C, the controller 12 may superimpose a second mark 92, indicating that the duration of the current temperature at point C is short but is longer than the duration of the current temperature at point B, on point C in the graph as additional information, thereby displaying the additional information in correspondence with the temperature at point C. In other words, the first mark 91 and the second mark 92 may be displayed in a manner corresponding to the duration of the current temperature at each point of the cable 40. For example, the first mark 91 may be displayed in a darker color than the second mark 92 to express that the duration of the current temperature at the point corresponding to the first mark 91 is shorter than the duration of the current temperature at the point corresponding to the second mark 92.

The first mark 91 is also referred to as information in a first form. The second mark 92 is also referred to as information in a second form. The information in the first form and the information in the second form may represent that the danger level at the position with the corresponding display of the information in the first form is higher than the danger level at the position with the corresponding display of the information in the second form.

The additional information may represent information that a human can interpret from the danger level trend. By superposition of additional information such as the information in the first form or the information in the second form on the graph of the temperature distribution, and display of the additional information in correspondence with the temperature, a human can simply look at the graph of the temperature distribution and recognize the information that a human could interpret by looking at the temperature trend or the danger level trend, without need for the temperature trend or the danger level trend to be displayed. By not having to display the temperature trend or danger level trend, the amount of displayed information is reduced. By a reduction in the amount of displayed information, the space on the display screen can be effectively utilized when displaying equivalent information. In addition, the resolution of the graph display of measured temperature values is increased.

The controller 12 may determine whether to display the first mark 91, which is the information in the first form, based on a predetermined condition. The predetermined condition for determining whether to display the information in the first form is also referred to as the first condition. For example, the controller 12 may determine the first condition to be that the duration of the state in which the temperature at a certain point is out of a predetermined range is less than a predetermined time. For example, the controller 12 may determine the first condition to be that the duration of the state in which the difference between the temperature at a certain point and the temperature at the surrounding points is out of a predetermined range is less than a predetermined time. The controller 12 may display, when the first condition based on the first temperature is satisfied, the information in the first form in correspondence with the portion at which the first condition is satisfied within the display of the first temperature. In other words, the controller 12 may display, when a position at which the first condition is satisfied based on the first temperature exists among at least one temperature measurement position, the information in the first form at the position at which the first condition is satisfied in correspondence with the position at which the first condition is satisfied within display of the first temperature. The controller 12 may display the information in the first form as information for determining whether the state of the cable 40 is abnormal.

The controller 12 may, for example, determine the first condition to be that the amount of change in temperature per unit time at a certain point is out of a predetermined range. In other words, the controller 12 may set the first condition so that the degree of abrupt change in temperature or the like can be displayed on the display apparatus 30 in a manner that a human can recognize. The degree of abrupt change in temperature may include duration information for the changed temperature. The controller 12 may display, when the first condition based on the change from the past second temperature to the current first temperature is satisfied, the information in the first form in correspondence with the portion at which the first condition is satisfied within the display of the first temperature.

The controller 12 may determine whether to display the second mark 92, which is the information in the second form, based on a predetermined condition. The predetermined condition for determining whether to display the information in the second form is also referred to as the second condition. The controller 12 may determine the second condition to be a condition in which the predetermined range set in the first condition is wider or the predetermined time is longer. Conversely, the controller 12 may determine the second condition to be a condition in which the predetermined range set in the first condition is narrower or the predetermined time is shorter. The controller 12 may set a condition different from the first condition as the second condition. The controller 12 may display, when the second condition based on the first temperature is satisfied, the information in the second form in correspondence with the portion at which the second condition is satisfied within the display of the first temperature. The controller 12 may display, when the second condition based on the change from the past second temperature to the current first temperature is satisfied, the information in the second form in correspondence with the portion at which the second condition is satisfied within the display of the first temperature.

The controller 12 may determine to display the information in the first form or the second form when the danger level satisfies a predetermined condition. The predetermined condition for determining to display the information in the first or second form based on the danger level is also referred to as the third condition. For example, the controller 12 may determine the third condition to be that the danger level has reached or exceeded a predetermined value. Specifically, the controller 12 may set the third condition so that the information in the first form is displayed when the danger level is 0.95 or higher. The controller 12 may set the third condition so that the information in the second form is displayed when the danger level is 0.5 or higher and less than 0.95. The values such as 0.5 or 0.95 that the controller 12 uses as reference values for determination based on the value of the danger level are not limited to these values. The controller 12 may set the reference value to other values as appropriate. The controller 12 may, when the danger level satisfies the third condition, display the information in the first form or the second form in correspondence with the portion at which the third condition is satisfied within the display of the first temperature. The controller 12 may, when the danger level satisfies the third condition, display the information in the first form or the second form in correspondence with the portion at which the third condition is satisfied within the display of the danger level. The controller 12 may, when the danger level satisfies the third condition, display the information in the first form in correspondence with at least one of the portion at which the third condition is satisfied within the display of the first temperature and the portion at which the third condition is satisfied within the display of the danger level. The controller 12 may, when the danger level satisfies the third condition, display the information in the second form in correspondence with at least one of the portion at which the third condition is satisfied within the display of the first temperature and the portion at which the third condition is satisfied within the display of the danger level.

For example, the temperature at point A in FIGS. 6, 7 and 8 is lower than the temperature at the surrounding points. However, point A is, for example, a point where the cable 40 is protected by a wave-dissipating block or the like and is not a point where the temperature has decreased due to a change in the burial state. Point A is a point such that the temperature is low to begin with, and no change has occurred. Point A therefore may be a location that is determined not to be abnormal based on the burial data. Point A may also be near a wind turbine, near land, or the like, where the cable 40 has been exposed to the seabed 81 since being laid. In other words, the portion of the cable 40 that is always exposed to the seabed 81 or intentionally exposed to the sea 84 for some reason does not correspond to a portion that has changed from its original burial state, which is what a human wants to know in order to diagnose the state of the cable 40.

The temperature at point B in FIGS. 6, 7 and 8 is higher and rises more rapidly than the temperature at the surrounding points. In this case, the display of the temperature at point B indicates the possibility of an abnormality due to insulation failure or the like of the cable 40, or due to damage to the cable 40 caused by various other factors. The controller 12 may set the time interval for calculating the amount of change in temperature as appropriate. The controller 12 may set the first condition so as to display, on the display apparatus 30, the information in the first form for making it easier for a human to recognize the change in temperature over time.

The temperature at point C in FIGS. 6, 7, and 8 is lower than the temperature at the surrounding points and began to decrease gradually at a past time close to the current time. In this case, the state of point C is changing gradually, unlike the steady state of point A. For example, the display of point C indicates that the burial position of the cable 40 at point C is gradually becoming shallower. In addition, the possibility of scouring is suspected based on how the range of decreasing temperature in the display at point C is gradually widening. At points where the state changes gradually, such as point C, the cable 40 is not actually damaged. Therefore, humans can respond to the anomaly at point C by scheduling an investigation or repair.

In the example of FIG. 8, the controller 12 displays the information in the first form, superimposed on the point at which the duration of the current temperature is less than the predetermined time, and the information in the second form, superimposed on the point at which the duration of the current temperature is short but is equal to or greater than the predetermined time, in different shapes. In other words, the information in the first form and the information in the second form may be distinguished by displaying them in different shapes as illustrated in FIG. 8. The controller 12 may display the information in the first form and the information in the second form with different chromaticity, brightness, or saturation. The information in the first form and the information in the second form may be distinguished by displaying them in different colors, for example. The information in the first form may be displayed in red, for example. The information in the second form may be displayed in orange or yellow, for example. The information in the first form and the information in the second form may be distinguished by displaying them in different shades of color, for example. The information in the first form may be displayed in a darker color, for example. The information in the second form may be displayed in a lighter color, for example. The controller 12 may distinguish between the information in the first form and the information in the second form by causing one of the two to flash. The controller 12 may display the information in the first form and the information in the second form with different flashing cycles.

The portion of the graph of the danger level displayed in FIG. 6 or FIG. 7 in which the value of the danger level is increasing, i.e., the peak portion of the graph, may be included in the information in the first form or the second form. Specifically, the portion corresponding to point B, at which the value of the danger level is increasing, may be included in the information in the first form. The portion corresponding to point C, at which the value of the danger level is increasing, may be included in the information in the second form.

The portion, in the image of the temperature trend illustrated in FIG. 6, that represents a change in temperature may be included in the information in the first form or the second form. Specifically, the pattern 61 corresponding to point B may be included in the information in the first form. The pattern 62 corresponding to point C may be included in the information in the second form. The temperature trend display may include information representing the change from the second temperature measured at each temperature measurement position of the cable 40 at the past second time to the first temperature measured at each temperature measurement position of the cable 40 at the current first time. Information representing the change from the second temperature measured at each temperature measurement position of the cable 40 at the past second time to the first temperature measured at each temperature measurement position of the cable 40 at the current first time may be included in the information in the first form or the information in the second form. The controller 12 can display the information in the first form or the information in the second form in correspondence with the measured temperature values by displaying the temperature trend in correspondence with the graph of the measured temperature values.

The portion, in the image of the danger level trend illustrated in FIG. 7, that represents an increasing value of the level of danger, i.e., the blackened portion, may be included in the information in the first form or the second form. Specifically, the pattern 71 corresponding to point B may be included in the information in the first form. The pattern 72 corresponding to point C may be included in the information in the second form. The controller 12 can display the information in the first form or the information in the second form in correspondence with the measured temperature values by displaying the danger level trend in correspondence with the graph of the measured temperature values.

As described above, the controller 12 of the diagnostic apparatus 10 may highlight characteristic portions in the display of the measured temperature values. The controller 12 may, for example, superimpose the information in the first form on the display of the measured temperature values, thereby displaying the information in the first form in correspondence with the measured temperature values. The temperature trend or the danger level trend including the information in the first form may be displayed in correspondence with the measured temperature values. The display of the information in the first form in correspondence with the measured temperature values makes it easier for a human to grasp the information representing the state of the cable 40. As a result of making it easier for a human to grasp the information representing the state of the cable 40, the accuracy of the diagnosis result of the state of the cable 40 is enhanced.

The controller 12 may notify a human of the occurrence of a highlighted display on the display apparatus 30 via another display device, or via other types of devices such as audio, vibration, or light emission. In this way, a human is less likely to miss a change in the state of the cable 40. Changes in the state of the cable 40 are constantly monitored as a result.

### <Example Procedures of Display Method>

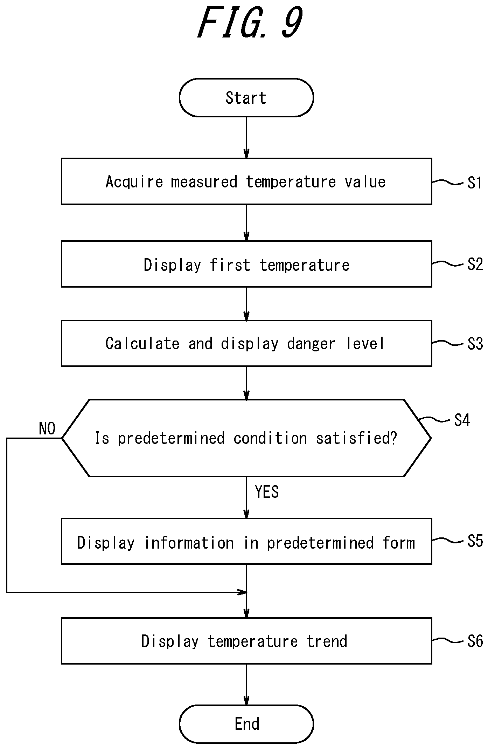

The controller 12 of the diagnostic apparatus 10 may execute a display method including the procedures in the flowchart illustrated in FIG. 9 to display information used by a human to diagnose the state of the cable 40. The display method may be implemented as a display program executed by a processor or computer that configures the controller 12. The display program may be stored on a non-transitory computer readable medium.

The controller 12 acquires the measured temperature value of each portion of the cable 40 from the temperature measurement apparatus 20 (step S1). Specifically, the controller 12 acquires the measured temperature value of each portion of the cable 40 at each time, treats the measured temperature value of each portion of the cable 40 at the first time, which is the current time, as the first temperature, and treats the measured temperature value of each portion of the cable 40 at the second time, which is a past time, as the second temperature.

The controller 12 displays the first temperature on the display apparatus 30 (step S2). The controller 12 calculates the danger level based on the measured temperature values and displays the danger level on the display apparatus 30 (step S3).

The controller 12 determines whether a predetermined condition is satisfied with respect to the measured temperature values or danger level (step S4). Specifically, the controller 12 may determine whether at least one of the first condition, second condition, or third conditions is satisfied. The controller 12 may determine whether all of the first condition, second condition, and third condition are satisfied. The conditions are not limited to the first condition, second condition, and third condition, and the controller 12 may determine whether various other conditions are satisfied.

When the predetermined condition is satisfied (step S4: YES), the controller 12 displays information in a predetermined form corresponding to the satisfied condition on the display apparatus 30 (step S5). Specifically, the controller 12 displays the information in the first form on the display apparatus 30 when the first condition is satisfied. The controller 12 displays the information in the second form on the display apparatus 30 when the second condition is satisfied. The controller 12 displays the information in the first form or the second form on the display apparatus 30 when the third condition with respect to the danger level is satisfied.

When the predetermined condition is not satisfied (step S4: NO), or after performing step S5, the controller 12 displays the temperature trend on the display apparatus 30 (step S6). The controller 12 may display the danger level trend on the display apparatus 30 instead of the temperature trend. The controller 12 may display both the temperature trend and the danger level trend on the display apparatus 30. The temperature trend or the danger level trend may include the display of the information in the first form or the second form regardless of the result of the determination in the determination procedure of step S4. After executing the procedure of step S6, the controller 12 ends execution of the procedures in the flowchart in FIG. 9.

The controller 12 need not perform the procedure to display the danger level in step S3 among the procedures in the flowchart illustrated in FIG. 9. The controller 12 need not perform the procedure to display the temperature trend or the danger level trend in step S3.

### <Summary>

As described above, in the diagnostic system 1 according to the present embodiment, the diagnostic apparatus 10 can display information in various forms, such as the first form or the second form based on the temperature of each portion of the cable 40, which is the target of diagnosis, on the display apparatus 30 in correspondence with the measured temperature values. The display of the information in various forms in correspondence with the measured temperature values makes it easier for a human to grasp the information representing the state of the cable 40. As a result of making it easier for a human to grasp the information representing the state of the cable 40, the accuracy of the diagnosis result of the state of the cable 40 is enhanced. It thus becomes easier for a human to recognize the state of each portion of the cable 40, which is the target of diagnosis. The accuracy of the diagnosis result of the state of the cable 40 is thereby enhanced.

The diagnostic apparatus 10 can distinguish and display information in the first form or the second form on the display apparatus 30 as information that corresponds to the measured temperature value. Distinguishing and displaying information in the first form or the second form as information that corresponds to the measured temperature value enables a human easily to grasp that it is less likely that the state of the cable 40 is abnormal at the position where the information in the second form is displayed than that the state of the cable 40 is abnormal at the position where the information in the first form is displayed. Varying the display form according to the likelihood that the state of the cable 40 is abnormal can provide a human with information to consider in diagnosing whether the state of the cable 40 is abnormal. As a result of a human obtaining information to consider, the accuracy of the diagnosis result of the state of the cable 40 is enhanced. The diagnostic apparatus 10 may also notify a human that the information in the first form or the second form is displayed on the display apparatus 30. In this way, a human is less likely to miss a change in the state of the cable 40. Changes in the state of the cable 40 are constantly monitored as a result. With the diagnostic system 1, a human can remotely check the contents displayed on the display apparatus 30 to diagnose the state of the targeted cable 40. The frequency and cost of visits by humans and the like to the site where the cable 40 is buried are reduced as a result. Furthermore, the reliability of the cable 40 is improved by the realization of constant monitoring.

### (Other Embodiments)

Other embodiments are described below.

### <Other Examples of Diagnosis Targets>

The diagnostic system 1 is not limited to the submarine cable of the offshore wind power generation apparatus 70 described above and may be applied to diagnosis of the state of various other cables 40. For example, the diagnostic system 1 may be applied to diagnosis of the state of submarine cables for providing power or communication to remote islands or the like. The diagnostic system 1 may be applied to diagnosis of the state of a cable 40 laid on land. For example, the diagnostic system 1 may be applied to diagnosis of the state of a cable 40 that is on land but is buried in the ground, or a cable 40 that is laid in areas where it is difficult for humans to enter, such as mountainous areas. The diagnostic system 1 may be applied to diagnosis of the state of deterioration of a cable 40. The diagnostic system 1 may be applied to diagnosis of the state of flooding of a cable 40.

Although embodiments of the present disclosure have been described through drawings and examples, it is to be noted that various changes and modifications may be made by those skilled in the art on the basis of the present disclosure. Therefore, such changes and modifications are to be understood as included within the scope of the present disclosure. For example, the functions and the like included in the various components may be reordered in any logically consistent way. Furthermore, components may be combined into one or divided.

### REFERENCE SIGNS LIST

1 Diagnostic system
10 Diagnostic apparatus (12: controller, 14: memory, 16: interface)
20 Temperature measurement apparatus
30 Display apparatus (32: controller, 34: memory, 36: display)
40 Cable (41: power line, 42: optical fiber, 43: sheath, 51: buried portion, 52: exposed portion, 53: buried portion, 54: shallow buried portion, 55: boundary portion)
61, 62, 63, 71, 72 Characteristic pattern
70 Offshore wind power generation apparatus
80 Ground
81 Seabed
84 In the sea
91 First mark
92 Second mark

## Claims

1. A display method comprising:
acquiring, as a first temperature, a measured temperature value at at least one temperature measurement position of a cable at a first time;
displaying the first temperature at the at least one temperature measurement position; and
displaying, when a position at which a first condition is satisfied based on the first temperature exists among the at least one temperature measurement position, information in a first form as information for determining whether a state of the cable is abnormal at the position at which the first condition is satisfied, the information in the first form being displayed in correspondence with the position at which the first condition is satisfied within display of the first temperature.

2. The display method according to claim 1, further comprising
acquiring, as a second temperature, a measured temperature value at the temperature measurement position at a second time earlier than the first time; and
displaying, when the first condition is satisfied based on a change from the second temperature to the first temperature, the information in the first form in correspondence with a portion at which the first condition is satisfied within the display of the first temperature.

3. The display method according to claim 2, further comprising displaying information representing the change from the second temperature to the first temperature.

4. The display method according to claim 3, wherein the information representing the change from the second temperature to the first temperature includes the information in the first form.

5. The display method according to claim 1, further comprising displaying, when a second condition based on the first temperature is satisfied, information in a second form in correspondence with a portion at which the second condition is satisfied within the display of the first temperature.

6. The display method according to claim 2, further comprising
calculating a danger level based on the first temperature and the second temperature; and
displaying the danger level in correspondence with the display of the first temperature.

7. The display method according to claim 6, further comprising displaying, when the danger level satisfies a third condition, the information in the first form in correspondence with at least one of a portion at which the third condition is satisfied within the display of the first temperature, or a portion at which the third condition is satisfied within display of the danger level.

8. A display program configured to cause a computer to execute the display method according to any one of claims 1 to 7.

9. A diagnostic apparatus comprising a controller configured to execute the display method according to any one of claims 1 to 7.
